# EUROPÄISCHE PATENTSCHRIFT

(11) **EP 1 971 516 B1**
(45) Veröffentlichungstag und Bekanntmachung des Hinweises auf die Patenterteilung: **20.01.2010**
(21) Anmeldenummer: 06829556.7
(22) Anmeldetag: 13.12.2006
(51) Int. Cl.: B62D 65/06

(54) **MONTAGEVERFAHREN UND MONTAGEANLAGE FÜR TÜREN AN FAHRZEUGKAROSSERIEN**
ASSEMBLY METHOD AND ASSEMBLY SYSTEM FOR DOORS ON VEHICLE BODIES
PROCEDE ET INSTALLATION DE MONTAGE DE PORTES SUR DES CARROSSERIES DE VEHICULES

(30) Priorität: 13.12.2005 DE 102005019619
(43) Veröffentlichungstag der Anmeldung: 24.09.2008
(73) Patentinhaber: KUKA Systems GmbH, 86165 Augsburg (DE)
(72) Erfinder: EMERICH, Bruno, 86163 Augsburg (DE); HESSE, Johann, 86152 Augsburg (DE); KOLLMAR, Thomas, 74223 Flein (DE)
(74) Vertreter: Ernicke, Klaus Stefan
(86) Internationale Anmeldenummer: PCT/EP2006/011979
(87) Internationale Veröffentlichungsnummer: WO 2007/068458

(56) Entgegenhaltungen:
- DE-A1- 4 214 863
- DE-A1- 10 347 554
- FR-A1- 2 651 711
- FR-A1- 2 839 697

## Beschreibung

Die Erfindung betrifft ein Montageverfahren und eine Montageanlage für die Montage von mindestens vier seitlichen Türen an einer Fahrzeugkarosserie.

Die DE 42 14 863 A1 offenbart eine Montagestation und ein Montageverfahren für eine Einzelmontage von Fahrzeugtüren mit vorausgerichteten Türscharnieren an Türausschnitten einer Fahrzeugkarosserie. Die vorderen und hinteren Türen auf der gleichen Fahrzeugseite werden zeitversetzt nacheinander montiert, wobei für die Montage der zweiten Türe die Lage der ersten bereits montierten Türe in Bezug genommen wird. Ein Roboter trägt an seiner Hand eine Haltevorrichtung für die Zuführung und Positionierung der zu montierenden einzelnen Türe. Eine an der Haltevorrichtung angebaute Sensoreinrichtung oder ein stationäres Kamerasystem dienen zur Vermessung des Türausschnitts und der ggf. zuvor montierten Türe, wobei anhand des Messergebnisses die Türe vom Roboter montagegerecht ausgerichtet werden kann. Mittels eines Roboters auf der gegenüber liegenden Fahrzeugseite, der ein Schweiß- oder Schraubwerkzeug führt, wird die im Türausschnitt eingesetzte Türe fixiert.

Die DE 103 47 554 A1 lehrt eine Montagetechnik mit einer zeitversetzten Montage von Hintertür und Vordertür.

Bei der FR 2 651 711 A1 ist nur von einer Einzeltürenmontage mittels eines Greifersystems und eines Roboters die Rede.

Die FR 2 839 697 A1 befasst sich mit einer Montagetechnik, die mit einem speziellen Türrahmen und einem dort bereits in einer Vormontage eingehängten Paar von Vorder- und Hintertür arbeitet, wobei der Türrahmen an der Karosserie montiert wird.

In der Praxis ist es ferner bekannt und üblich, bei viertürigen Fahrzeugkarosserien die vorderen Seitentüren paarweise links und rechts und anschließend die hinteren Seitentüren paarweise links und rechts an der Fahrzeugkarosserie zu montieren, wobei diese Reihenfolge auch umgekehrt werden kann. Hierdurch werden an jeder Fahrzeugseite die vorderen und hinteren Seitentüren zeitversetzt montiert. Dies hat sich angesichts der steigenden Qualitätsanforderungen an das optische Erscheinungsbild von Fahrzeugen als unzureichend erwiesen.

Es ist Aufgabe der vorliegenden Erfindung, eine bessere Montagetechnik aufzuzeigen.

Die Erfindung löst diese Aufgabe mit den Merkmalen im Verfahrens- und Vorrichtungshauptanspruch.
Die beanspruchte Montagetechnik hat den Vorteil, dass auf jeder Fahrzeugseite die dortigen Seitentüren gemeinsam und in gegenseitiger Abstimmung untereinander und mit der Fahrzeugkarosserie montiert werden können. Durch die gegenseitige Ausrichtmöglichkeit ist ein besseres und gleichmäßigeres optisches Erscheinungsbild des Fahrzeugs erreichbar. Sichtbare Spalte und andere Designlinien können in optimaler Form präsentiert werden. Bei der Erstmontage der noch nackten Seitentüren können außerdem geeignete Vorhalte für die spätere Endmontage der fertigen und schwereren Türen in passgenauer Weise berücksichtigt werden.

Die Türenmontage vom Karosserieinnenraum her mit einer entsprechend geeigneten Fixiereinrichtung hat den Vorteil, dass eine Fixierung der vorzugsweise vorab mit Türscharnieren versehenen Seitentüren in der Schließstellung im Türausschnitt der Fahrzeugkarosserie geschehen kann. Dies ist die von der Positioniereinrichtung bestimmte Türenlage, die letztendlich für das optische Erscheinungsbild des fertigen Fahrzeugs maßgeblich ist. Die beanspruchte Montagetechnik bietet hierfür auch besonders geeignete Ausgestaltungen des Türscharniers mit abgewinkelten Scharnierflanschen und der zur Fixierung vorgesehenen Karosserieteile, insbesondere der Türsäulen oder Türholme an. Die Außenmontage der Scharnierflansche an den Türsäulen ist hierfür besonders geeignet und erleichtert die Fixierung vom Karosserieinnenraum her.

Bei der beanspruchten Montagetechnik ist es ferner günstig, dass die vorzugsweise jeweils aus Robotern bestehende Positionier- und Fixiereinrichtungen ohne gegenseitige Behinderung angeordnet sein können. Hierfür ist es insbesondere vorteilhaft, wenn die Fixierroboter an der anderen Fahrzeugseite angeordnet sind und mit ihren Fixierwerkzeugen, z.B. Schraub- oder Schweißwerkzeugen, durch den benachbarten Türausschnitt oder ggf. dem Fensterausschnitt einer bereits montierten Seitentüre in den Karosserieinnenraum langen und die gegenüber liegenden Fixierstellen der zu montierenden Seitentüren erreichen.

Mit der beanspruchten Montagetechnik werden in einer ersten Montagestation zwei oder mehr Seitentüren auf der einen Fahrzeugseite und anschließend in einer ggf. weiteren Montagestation die Seitentüren der anderen Fahrzeugseite montiert. Die seitenweisen Montagevorgänge können auch innerhalb einer einzigen Montagestation mit entsprechend funktionsflexiblen Positionier- und Fixiereinrichtungen durchgeführt werden. Die seitenweise Türenmontage und die störungsfreie Aufstellmöglichkeit der Positionier- und Fixierroboter bietet ferner die Möglichkeit, innerhalb einer Montagestation auf der gleichen Fahrzeugseite weitere Karosserieteile, z.B. Kotflügel oder dgl., zu montieren.

Die Vormontage von Türscharnieren an den Seitentüren hat den Vorteil, dass allfällige Toleranzen an den Karosseriebauteilen besser aufgenommen und kompensiert werden können. Durch die bei der passgenauen Türpositionierung benutzte Mess- und Ausrichtvorrichtung oder durch eine andere Messvorrichtung kann während und nach der Türmontage überprüft werden, ob die Vormontage der Türscharniere an der Seitentüre korrekt war und ob die bestehenden Toleranzen korrekt aufgenommen wurden. Wenn hierbei Abweichungen festgestellt werden und sich über eine statistische Erfassung und Auswertung ein Trend in der Toleranzentwicklung zeigt, kann dem durch eine entsprechende Rückmeldung an die Vormontage und eine entsprechende Vorkompensation der festgestellten Maßabweichungen für die Folgetüren zielgerichtet entgegen gewirkt werden.

In den Unteransprüchen sind weitere vorteilhafte Ausgestaltungen der Erfindung angegeben.

Die Erfindung ist in den Zeichnungen beispielsweise und schematisch dargestellt. Im einzelnen zeigen:
- Figur 1:: eine schematische Draufsicht auf eine Montageanlage mit mehreren Montagestationen für die seitenweise Montage von Seitentüren an einer Fahrzeugkarosserie,
- Figur 2:: eine perspektivische Darstellung einer Montagestation mit gegenüber liegend an der Fahrzeugkarosserie angeordneten Positionier- und Fixiereinrichtungen,
- Figur 3:: eine Draufsicht auf die Montagestation von Figur 2,

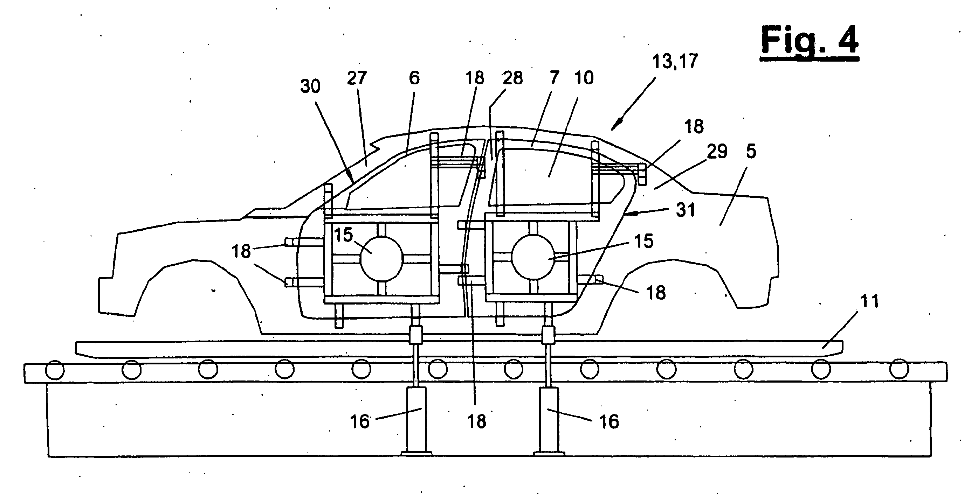

- Figur 4:: eine Seitenansicht der Fahrzeugkarosserie mit Greifwerkzeugen ohne Roboter gemäß Pfeil IV von Figur 3 und
- Figur 5 und 6:: Draufsicht einer Türe mit Türscharnier in Ausricht- und Montagestellung.

Die Erfindung betrifft eine Montagetechnik für die seitenweise Montage von Seitentüren (6,7,8,9) an einer Fahrzeugkarosserie (5). Dies betrifft im einzelnen die hierfür vorgesehene Montageanlage (1) und im weiteren auch das Montageverfahren sowie die montagegerechte Ausgestaltung der Fahrzeugteile, insbesondere der Fahrzeugkarosserie (5), der Seitentüren (6,7,8,9) und der Türscharniere (34).

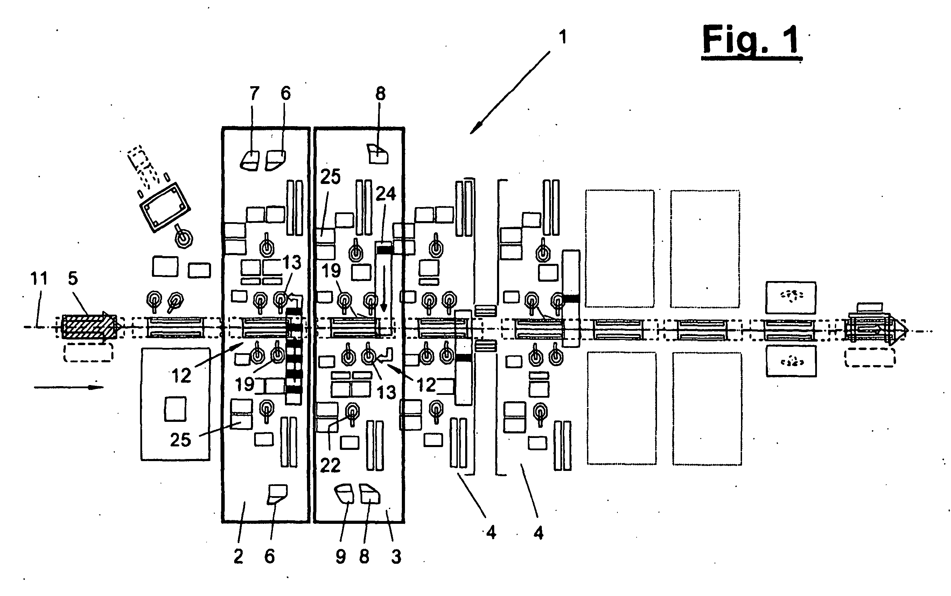

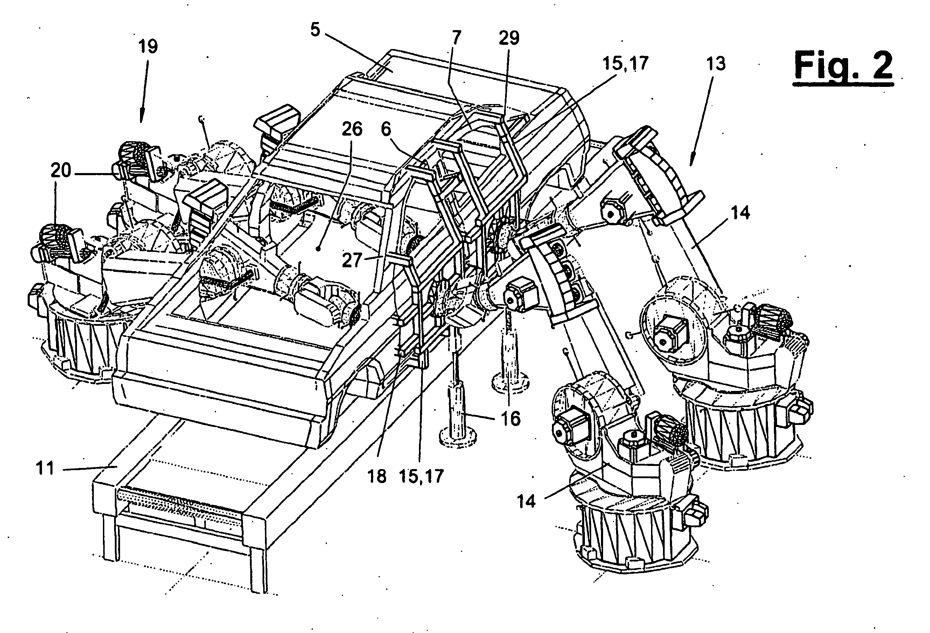

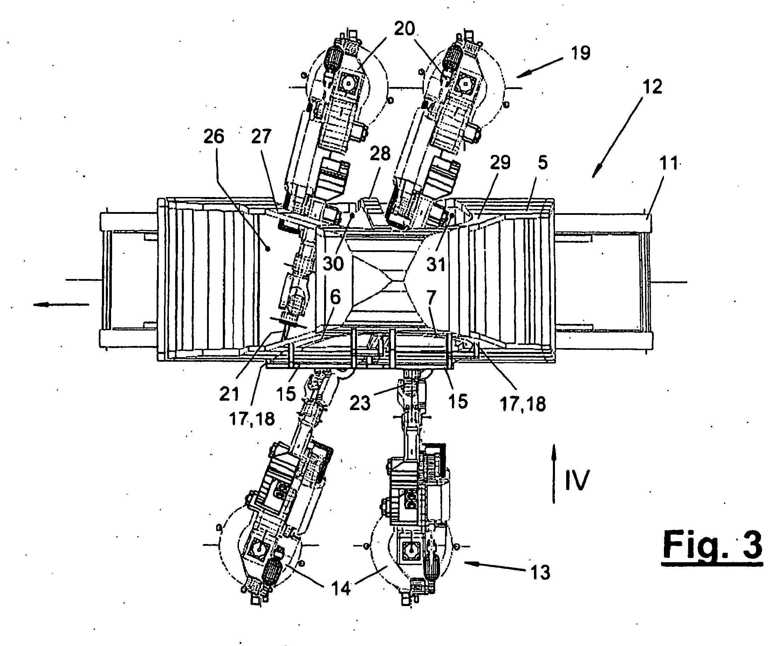

Figur 1 zeigt in einer schematischen Draufsicht eine Montageanlage (1) für Fahrzeugkarosserien (5), die auf einem Förderer (11) entlang einer Transferlinie zugeführt und durch mehrere Stationen (2,3,4) transportiert werden. Bei der Fahrzeugkarosserie (5) handelt es sich um eine Rohkarosserie von Fahrzeugen, die zumindest aus Seitenwänden mit Querverbindungen über ein Dachteil und/oder eine Bodengruppe besteht. Andere Karosserieteile, wie Querträger für die Hutablage, die Vorder- und Rückwand der Karosserie etc. können ebenfalls vorhanden sein. In Figur 2 und 3 ist eine solche Fahrzeugkarosserie (5) schematisch dargestellt. Die Fahrzeugkarosserie (5) ist für ein zumindest viertüriges Fahrzeug bestimmt, wobei die Seitenwände auf jeder Fahrzeugseite mindestens zwei Türausschnitte (30,31) für vordere und hintere Seitentüren (6,7,8,9) besitzen. In der gezeigten Ausführungsform handelt es sich um übliche Limousinenformen mit zwei Seitentürenpaaren links und rechts. Alternativ können auf jeder Fahrzeugseite mehr als zwei Seitentüren (6,7,8,9) vorhanden sein, was z.B. bei Stretchlimousinen oder bei anderen Sonderfahrzeugen der Fall sein kann. Die nachfolgende Beschreibung bezieht sich auf viertürige Fahrzeuge und kann in entsprechender Weise auch auf diese Sonderfahrzeuge übertragen werden.

In den beidseitigen vorderen und hinteren Türausschnitten (30,31) der Fahrzeugkarosserie (5) werden in zwei aufeinander folgenden Montagestationen (2,3) seitenweise und paarweise die linken und rechten Seitentüren montiert. Hierbei handelt es sich vorzugsweise um die Erstmontage, in der die Seitentüren (6,7,8,9) in der Rohform vorliegen und noch nicht mit allen Einbauteilen bestückt sind. Diese Erstmontage findet vorzugsweise vor der Lackierung statt. Nach der gemeinsamen Lackierung der Fahrzeugkarosserie (5) und der Seitentüren (6,7,8,9) werden die Seitentüren wieder entfernt, wobei die nachfolgend näher beschriebenen Türscharniere (34) z.B. durch Ziehen der Scharnierbolzen im Gelenk (37) getrennt werden. Die Seitentüren werden anschließend mit Anbauteilen bestückt und zum Schluss wieder montiert, wobei die Scharnierhälften über die eingesetzten Scharnierbolzen wieder verbunden werden. Bei der Erstmontage wird auf das durch die später angebrachten Anbauteile veränderte Gewicht der fertigen Seitentüren (6,7,8,9) Rücksicht genommen, wobei auch andere Türenänderungen vorbeugend bei der Erstmontage beachtet werden können.

In der in Figur 1 gezeigten Variante der Montageanlage werden z.B. in der ersten Montagestation (2) die zwei vorderen und hinteren Seitentüren (6,7) auf der linken Fahrzeugseite gemeinsam montiert. In der nachfolgenden Montagestation (3) werden die vorderen und hinteren Seitentüren (8,9) auf der rechten Fahrzeugseite gemeinsam montiert. Die Montagestationen (2,3) schließen vorzugsweise in Transferrichtung unmittelbar aneinander an. Die Montagereihenfolge links/rechts kann alternativ vertauscht werden. In weiteren Folgestationen (4) können zusätzliche Montagevorgänge stattfinden, z.B. der Anbau von Kotflügeln etc.

In Abwandlung der gezeigten Ausführungsform können beide Montagestationen (2,3) zu einer einzigen Montagestation zusammengefasst werden, in der nacheinander und wieder seitenweise die vorderen und hinteren Seitentüren zuerst auf der einen Seite und dann auf der anderen Fahrzeugseite montiert werden. Ferner ist es möglich, in der oder den Montagestationen (2,3) auch weitere Karosserieteile, wie z.B. die vorerwähnten Kotflügel etc., an der Fahrzeugkarosserie (5) zu montieren.

Gemäß Figur 1 kann die Bereitstellung und Zuführung der vorderen und hinteren Seitentüren (6,7,8,9) und ggf. auch die Vorbereitung und insbesondere die Vormontage dieser Seitentüren (6,7,8,9) auf beiden Seiten der Transferlinie geschehen. Mittels einer die Transferlinie überbrückenden Bauteilzuführung (24) werden die vorbereiteten vorderen und hinteren Seitentüren (6,7,8,9) auf der benötigten Fahrzeugseite oder Montageseite zusammengeführt.

Vorzugsweise werden die Seitentüren (6,7,8,9) vor der Montage an der Fahrzeugkarosserie (5) mit Türscharnieren (34) bestückt. Dies kann an einer Vormontageeinrichtung (25) geschehen, die extern oder innerhalb der Montagestationen (2,3) angeordnet sein kann. Auf die Scharniermontage wird nachfolgend näher eingegangen.

Für die Seitentürenmontage ist in jeder Montagestation (2,3) eine Montageeinrichtung (12) vorhanden. Diese besteht jeweils aus einer Positioniereinrichtung (13) zum Führen und montagegerechten Halten der Seitentüren (6,7,8,9) und einer Fixiereinrichtung (19) für die Fixierung der Seitentüren (6,7,8,9) und insbesondere der Türscharniere (34) an der Fahrzeugkarosserie (5). Die Türscharniere (34) werden hierbei z.B. an den Türsäulen (27,28,29) montiert und fixiert. Die Fahrzeugkarosserie (5) hat beidseitig eine A-Säule (27), eine mittlere B-Säule (28) und eine heckseitige C-Säule (29).

Die Positioniereinrichtung (13) und die Fixiereinrichtung (19) sind in der gezeigten Ausführungsform an der Transferlinie und der Fahrzeugkarosserie (5) gegenüber liegend angeordnet. Die Positioniereinrichtung (13) hält hierbei die mit einem Greifwerkzeug (15) aufgenommenen Seitentürenpaare (6,7) und (8,9) passgenau und montagegerecht an die zugewandte Seite der Fahrzeugkarosserie (5) und positioniert sie dabei vorzugsweise in einer eingemittelten und ausgerichteten Lage in den vorderen und hinteren Türausschnitten (30,31).

Die Fixierung erfolgt vorzugsweise an der Fahrzeuginnenseite und aus dem Karosserieinnenraum (26) heraus. Die Fixiereinrichtung (19) kann mit ihren ein- oder mehrfach vorhandenen Fixierwerkzeugen (21) zu diesem Zweck derart ausgelegt sein, dass sie in den Karosserieinnenraum (26) greifen und mit ihren Fixierwerkzeugen (21) an die Türscharniere (34) gelangen kann. Bei der gezeigten Anordnung greift die Fixiereinrichtung (19) bei der ersten Montagestation (2) durch die noch offenen Türausschnitte (30,31) auf ihrer Seite und durch den Karosserieinnenraum (26) hindurch. In der zweiten Montagestation (3) greift die dortige und auf der anderen Fahrzeugseite angeordnete Fixiereinrichtung (19) durch die Fensterausschnitte der auf dieser Seite bereits montierten Seitentüren (6,7) hindurch.

Die Positioniereinrichtung (13) besteht z.B. aus zwei Positionierrobotern (14), die vorzugsweise als mehrachsige, insbesondere sechsachsige Gelenkarmroboter ausgebildet und eine mehrachsige Roboterhand (23) aufweisen. Die beiden nebeneinander angeordneten Positionierroboter (14) tragen jeweils ein Greifwerkzeug (15), welches aus einem Gestell mit daran entsprechend der Türengeometrie angeordneten steuerbaren Greifern besteht. Die Positionierroboter (14) können mit ihren Greifwerkzeugen (15) die in vorbestimmter Lage bereit gestellten Seitentüren (6,7,8,9) greifen und in einer gegenseitig abgestimmten Weise bewegen.

In einer nicht dargestellten Abwandlung ist es möglich, einen einzelnen Positionierroboter (14) und ein Kombi-Greifwerkzeug zu verwenden, welches mit entsprechend ausgestalteten Greifwerkzeugen und mit integrierten Zusatzachsen zwei vordere und hintere Seitentüren (6,7) bzw. (8,9) gemeinsam greifen und relativ zueinander vorzugsweise mehrachsig in einer gegenseitig abgestimmten Weise bewegen kann.

Die Positioniereinrichtung (13) ist mit einer Mess- und Ausrichtvorrichtung (17) für die passgenaue Positionierung der Seitentüren (6,7,8,9) ausgerüstet. Diese umfasst z.B. mehrere Sensoren (18), die flächig verteilt am Greifwerkzeug (15) angeordnet sein können. Dies können z.B. Kanten tastende und/oder Abstand messende Sensoren sein, die kontaktierend oder berührungsfrei arbeiten. Beispielsweise sind optische Sensoren, aber auch alle anderen beliebig geeigneten Sensorentypen, z.B. auch bildaufnehmende Kameras, möglich. Die Sensoren (18) sind mit einer nicht dargestellten Steuerung zur Auswertung der Messergebnisse verbunden. Die Mess- und Ausrichtvorrichtung (17) ist mit den Positionierrobotern (14) und deren Steuerung verbunden und ermöglicht deren abgestimmte Bewegung für die passgenaue Türenmontage.

Über diese abgestimmte Bewegung kann ein optimierter Spaltverlauf und eine gegenseitige optimierte Ausrichtung der vorderen und hinteren Seitentüren (6,7) bzw. (8,9) erreicht werden. Außerdem können die Seitentürenpaare in optimierter Weise gegenüber der Fahrzeugkarosserie (5) und insbesondere den Türausschnitten (30,31) ausgerichtet werden. Hierbei ist auch eine Ausrichtung gegenüber Designlinien, z.B. Knickkanten, an der Seitenwand, möglich. Insbesondere wird angestrebt, die im Sichtbereich an der Oberseite sowie der Vorder- und Rückseite der Seitentüren (6,7,8,9) verlaufenden Spalte gegenüber den Rändern der Türausschnitte (30,31) zu optimieren, indem die Spalte gleich groß gemacht und dabei möglichst klein gehalten werden. Der notwendige Toleranzausgleich kann an der Türenunterseite erfolgen, wo größere Sichtspalte weniger auffallen. Bei der Türenmontage kann auch auf eine Flucht der Türenoberkanten und der Unterkanten der Fensterausschnitte (10) geachtet werden. Insbesondere können die Seitentüren (6,7,8,9) in ihren Türenausschnitten (30,31) eingemittelt und entsprechend verschoben und ausgerichtet werden. Hierbei kann auch ein Querkippen der Seitentüren (6,7,8,9) durch die entsprechend beweglichen Positionierroboter (14) zum Aufbringen einer eventuell gewünschten Vorspannung in der Türe erfolgen. Außerdem kann bei der Türenpositionierung ein Vorhalt Berücksichtigung finden, um das nach der Türenfertigstellung bestehende höhere Türengewicht vorbeugend zu kompensieren. Auch eventuelle Formänderungen der Seitentüre (6,7,8,9) in Folge der späteren Bauteilbestückung können bei der Erstmontage berücksichtigt werden:

Mit den Sensoren (18) können einerseits die Seitentüren (6,7,8,9) mit ihren relevanten Partien und insbesondere ihren Konturen im Außenumriss und im Fensterausschnitt (10) vermessen werden. Hierbei werden z.B. repräsentative Kanten oder andere Türenteile erfasst und in ihrer Ist-Lage vermessen. Mit den Sensoren (18) können ferner in entsprechender Weise die Türausschnitte (30,31) nach ihren Ist-Maßen und ihrer räumlichen Ist-Lage vermessen werden. Anhand dieser Messwerte kann über die vorerwähnte Steuerung die passgenaue Türenausrichtung und Einmittlung erfolgen. Die Positionierroboter (14) halten mit ihren Greifwerkzeugen (15) die Seitentürenpaare (6,7) bzw. (8,9) für die Fixierung in einer montagegerechten Schließstellung in den Türausschnitten (30,31), wobei in der vorerwähnten Weise eventuelle Vorspannungen, Vorhalte oder dgl. berücksichtigt werden. Für die anschließende Fixierung können die Greifwerkzeuge (15) durch bewegliche Momentenstützen (16), z.B. gesteuert ausfahrbare bodenseitige Stützstempel, zur Entlastung der Roboter und zur Aufnahme der bei der Fixierung auftretenden Reaktionskräfte abgestützt werden. Die Ansteuerung und Positionierung der Momentenstützen (16) erfolgt über die Mess- und die Ausrichtvorrichtung (17). Alternativ können die Positionierroboter (14) gesteuerte Ausgleichsbewegungen zur Aufnahme der Reaktionskräfte ausführen.

Die Fixiereinrichtung (19) besteht in der gezeigten Ausführungsform aus zwei Fixierrobotern (20), die den Positionierrobotern (14) gegenüber liegend auf der anderen Fahrzeugseite nebeneinander angeordnet sind. Die Fixierroboter (20) sind ebenfalls als mehrachsige Gelenkarmroboter mit einer Roboterhand (23) für die mehrachsige Führung der hier angebauten Fixierwerkzeuge (21) ausgebildet. Die Fixierwerkzeuge können z.B. Schraubwerkzeuge oder Schweißwerkzeuge oder dgl. sein.

In Abwandlung der gezeigten Ausführungsform können die Fixierroboter (24) oberhalb der Transferlinie angeordnet und z.B. als Portalroboter ausgebildet sein. Die Fixierroboter (20) können mit ihren Roboterarmen und der Roboterhand (23) auch durch die front- und heckseitigen Fensteröffnung in den Karosserieinnenraum (26) greifen. Zudem ist es möglich, die mit einer entsprechenden Reichweite ausgestatteten Fixierroboter (20) auch auf der gleichen Seite und neben den Positionierrobotern (14) anzuordnen, wobei der Zugang zur Fahrzeuginnenseite wiederum über das Front- und Heckfenster erfolgt.

Die Seitentüren (6,7,8,9) werden mit vormontierten und montagegerecht ausgerichteten Türscharnieren (34) positioniert und bei der Montage fixiert. Die Scharniermontage erfolgt hierbei z.B. an der Außenseite (31) der Türsäulen (27,28,29), wobei die Fixierstelle im Säuleninnenraum über ein oder mehrere Durchlassöffnungen (39) an der Säuleninnenseite (32) erreichbar ist. Durch diese Durchlassöffnungen (39) können geeignete Fixierelemente (38), z.B. Schrauben, mit den Fixierwerkzeugen (21) oder auf andere Weise eingebracht und aktiviert werden.

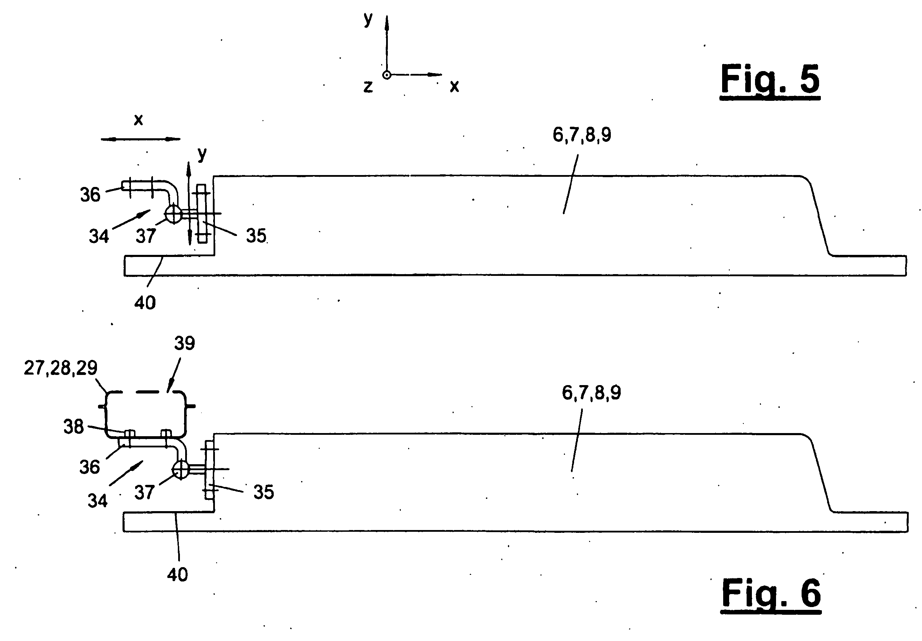

Bei der Scharnierfixierung an der Türsäule (27,28,29) können etwaige Toleranzen in X- und Z-Richtung ausgeglichen werden, wie dies z.B. in Figur 5 angedeutet ist. Hierfür können beispielsweise als Fixierelemente Käfigmuttern verwendet werden, die zweiachsig beweglich in einer Blechhalterung am Türscharnier (34) gehalten und von der mit einem Zentrierdorn eingeführten Schraube in die richtige Schraubposition gezogen und verschraubt werden. Das Fixierwerkzeug (21) kann zu diesem Zweck als schwimmender Schrauber ausgebildet sein. Alternativ kann bei einem Verschweißen des Türscharniers (34) ein Toleranzausgleich über die Schweißnaht erfolgen.

Wie Figur 5 und 6 verdeutlichen, besitzt das Türscharnier (34) ein zentrales Gelenk (37) mit dem vorerwähnten Scharnierbolzen und zwei hier beweglich angeschlossene Scharnierflansche (35,36). Die Scharnierflansche (35,36) haben eine abgewinkelte Form, wobei z.B. der türseitige Scharnierflansch (35) im Querschnitt T-förmig ausgebildet ist und eine ebene Flanschplatte mit einem hiervon abstehenden Anschlusssteg zum Gelenk (37) aufweist. Der säulenseitige Scharnierflansch (36) ist z.B. im Querschnitt als L-förmig gebogene Scharnierplatte ausgebildet. Für die Fixierung an der Türsäule (27,28,29) oder einem anderen Teil des Türenausschnitts (30,31) kann der säulenseitige Scharnierflansch (36) bei der Vormontage an der Seitentür (6,7,8,9) in eine montagegerechte Winkelstellung gebracht und in geeigneter Weise temporär fixiert werden. Wie Figur 5 und 6 verdeutlichen, sind die Scharnierflansche (35,36) in der Schließstellung der Seitentüre (6,7,8,9) im wesentlichen rechtwinklig zueinander ausgebildet. Die Seitentüre (6,7,8,9) hat hierfür einen entsprechend geformten und ausreichend großen Türfalz (40).

Bei der Türenmontagen sind Toleranzen in den translatorischen X-, Y- und Z-Achsen sowie ggf. auch in rotatorischen Achsen zu berücksichtigen. Für die translatorische Toleranzaufnahme ist z.B. der türseitige Scharnierflansch (35) eben ausgebildet und in Y-Richtung ausgerichtet. In der Y-Richtung besteht eine Toleranzaufnahme durch Langlöcher oder dergleichen. Bei der Vormontage des Türscharniers (14) können diese Toleranzen in Y-Richtung erfasst und bei der Scharnierbefestigung kompensiert werden. Die Toleranzen in der X- und Z-Richtung werden in der vorerwähnten Weise durch die Befestigung oder Fixierung des karosserieseitigen Scharnierflansches (36) kompensiert. Hierfür können z.B. für eine Verschraubung Bohrungen mit Übermaß verwendet werden.

Durch eine Türenvermessung während und nach der Montage, die z.B. mit der Mess- und Ausrichtvorrichtung (17) oder auf andere Weise vorgenommen wird, kann festgestellt werden, ob die Toleranzen bei der Scharniermontage korrekt und ausreichend aufgenommen wurden. Wenn sich z.B. Änderungen an der Türsäule (27,28,29) ergeben sollten, die eine veränderte Scharniermontage in Y-Richtung bedingen, kann dies rechnerisch erfasst, ausgewertet und durch entsprechende Rückkopplung und Steuerung der Vormontage an der Seitentüre bei den Folgetüren vorbeugend kompensiert werden. Hierfür kann eine statistische Erfassung und
Auswertung der Messergebnisse stattfinden, um eventuelle Trends bei Formänderungen der Fahrkarosserie (5) rechtzeitig und zielgerichtet erfassen und entsprechend kompensieren zu können.

Abwandlungen der gezeigten und beschriebenen Ausführungsformen sind in verschiedener Weise möglich. Die Türfixierung kann bei geeigneter Türgestaltung von außen und ohne Eingriff in den Karosserieinnenraum (26) erfolgen, wobei die zusammen wirkenden Positionier- und Fixiereinrichtungen (13,19) auf der gleichen Fahrzeugseite angeordnet sind. Alle Seitentüren (6,7,8,9) können auch gleichzeitig montiert und fixiert werden. Die beanspruchte Innenfixierung der Seitentüren (6,7,8,9) lässt sich andererseits auch mit konventionellen Montagetechniken und bei der Einzelmontage der Türen durchführen. Sie hat insofern eigenständige erfinderische Bedeutung. Ferner können die konstruktive Ausgestaltung der Montageeinrichtung (12) und ihrer Komponenten, wie andererseits auch die Gestaltung der Fahrzeugkarosserie (5) und ihrer Teile sowie der Türscharniere (34) abgewandelt werden. Die Montageanlage (1) kann ansonsten in beliebig geeigneter Weise ausgebildet sein.

### BEZUGSZEICHENLISTE

- 1: Montageanlage
- 2: Montagestation
- 3: Montagestation
- 4: Folgestation
- 5: Fahrzeugkarosserie
- 6: Seitentüre vorn links
- 7: Seitentüre hinten links
- 8: Seitentüre vorn rechts
- 9: Seitentüre hinten rechts
- 10: Fensterausschnitt
- 11: Förderer
- 12: Montageeinrichtung
- 13: Positioniereinrichtung
- 14: Positionierroboter
- 15: Greifwerkzeug
- 16: Momentenstütze
- 17: Mess- und Ausrichtvorrichtung
- 18: Sensor
- 19: Fixiereinrichtung
- 20: Fixierroboter
- 21: Fixierwerkzeug, Schraubwerkzeug, Schweißwerkzeug
- 22: Handlingroboter
- 23: Roboterhand
- 24: Bauteilzuführung
- 25: Vormontageeinrichtung für Scharniermontage
- 26: Innenraum Fahrzeugkarosserie
- 27: Türsäule, A-Säule
- 28: Türsäule, B-Säule
- 29: Türsäule, C-Säule
- 30: Türausschnitt vorn
- 31: Türausschnitt hinten
- 32: Innenseite Säule
- 33: Außenseite Säule
- 34: Türscharnier
- 35: Scharnierflansch Türseite
- 36: Scharnierflansch Karosserieseite
- 37: Gelenk, Scharnierbolzen
- 38: Fixierelement, Schraube
- 39: Durchlassöffnung
- 40: Türfalz

## Patentansprüche

1. Montageanlage (1) für die Montage von mindestens vier Seitentüren (6,7,8,9) an einer Fahrzeugkarosserie (5) mit Türausschnitten (30,31), wobei mindestens eine Montagestation (2,3) für die jeweils gemeinsame Montage mehrerer Seitentüren (6,7,8,9) an jeweils einer Fahrzeugseite vorgesehen ist, wobei in den Montagestationen (2,3) eine Montageeinrichtung (12) angeordnet ist, die eine Positioniereinrichtung (13) mit einer Mess- und Ausrichtvorrichtung (17) für die Seitentüren (6,7,8,9) und eine Fixiereinrichtung (19) für die Türenfixierung aufweist.

2. Montageanlage nach Anspruch 1, **dadurch gekennzeichnet, dass** die Positioniereinrichtung (13) auf einer Seite der Fahrzeugkarosserie (5) und die Fixiereinrichtung (19) daneben oder auf der gegenüberliegenden Karosserieseite angeordnet ist und wobei die Fixiereinrichtung (19) in den Karosserieinnenraum (26) beweglich ist und für eine innenseitige Türenfixierung von der anderen Fahrzeugseite her ausgelegt ist.

3. Montageanlage nach Anspruch 1 oder 2, **dadurch gekennzeichnet, dass** die Montageanlage (1) mehrere aufeinander folgende Montagestationen (2,3) mit seitenvertauschter Anordnung der Positionier- und Fixiereinrichtungen (13,19) aufweist.

4. Montageanlage nach Anspruch 1, 2 oder 3, **dadurch gekennzeichnet, dass** die Montageeinrichtung (12) für eine Montage der Seitentüren (6,7,8,9) in Schließstellung in den Türausschnitten (30,31) ausgelegt ist.

5. Montageanlage nach einem der Ansprüche 1 bis 4, **dadurch gekennzeichnet, dass** die Positioniereinrichtung (13) mindestens zwei mit der Mess- und Ausrichtvorrichtung (17) verbundene Positionierroboter (14) mit Greifwerkzeugen (15) für jeweils eine Seitentüre (6,7,8,9) aufweist.

6. Montageanlage nach einem der Ansprüche 1 bis 4, **dadurch gekennzeichnet, dass** die Positioniereinrichtung (13) einen Positionierroboter (14) mit einem Kombi-Greifwerkzeug mit Zusatzachsen zum eigenständigen Halten und Bewegen von mehreren Seitentüren (6,7,8,9) aufweist, wobei die Zusatzachsen mit der Mess- und Ausrichtvorrichtung (17) verbunden sind.

7. Montageanlage nach einem der vorhergehenden Ansprüche, **dadurch gekennzeichnet, dass** die Mess- und Ausrichtvorrichtung (17) mehrere an dem oder den Greifwerkzeugen (15) angeordnete Sensoren (18) zum Vermessen der Ist-Lage und der Ist-Maße der Seitentüren (6,7,8,9) und der Fahrzeugkarosserie (5), insbesondere der Türausschnitte (30,31), und eine Steuerung zum passgenauen Ausrichten der Seitentüren (6,7,8,9) untereinander und relativ zu den Türausschnitten (30,31) aufweist.

8. Montageanlage nach einem der vorhergehenden Ansprüche, **dadurch gekennzeichnet, dass** die Positioniereinrichtung (13) mindestens eine von der Mess- und Ausrichtvorrichtung (17) steuerbare Momentenstütze (16) für das oder die Greifwerkzeuge (15) aufweist.

9. Montageanlage nach einem der vorhergehenden Ansprüche, **dadurch gekennzeichnet, dass** die Fixiereinrichtung (19) ein oder mehrere Fixierroboter (20) mit Fixierwerkzeugen (21) aufweist.

10. Montageanlage nach einem der vorhergehenden Ansprüche, **dadurch gekennzeichnet, dass** die Montageanlage (1) ein oder mehrere Vormontageeinrichtungen (25) für die Scharniermontage an den Seitentüren (6,7,8,9) aufweist.

11. Montageanlage nach einem der vorhergehenden Ansprüche, **dadurch gekennzeichnet, dass** das Türscharnier (32) bei der Vormontage in y-Richtung an der Seitentüre (6,7,8,9) positionierbar ist, wobei das Türscharnier (32) bei der anschließenden Türmontage in x-, und z-Richtung am Türausschnitt der Seitentüre (6,7,8,9) positionierbar ist.

12. Montageanlage nach einem der vorhergehenden Ansprüche, **dadurch gekennzeichnet, dass** das Türscharnier (32) bei der Türmontage an der Außenseite (33) einer Türsäule (27,28,29) befestigbar ist, wobei die Türsäule (27,28,29) an der Innenseite (32) mindestens eine Durchlassöffnung (39) für ein Fixiermittel (38) aufweist.

13. Montageanlage nach einem der vorhergehenden Ansprüche, **dadurch gekennzeichnet, dass** die Seitentüre (6,7,8,9) einen Türfalz (40) zur Aufnahme des Türscharniers (34) und seiner in Schließstellung im wesentlichen rechtwinklig zueinander ausgerichteten Scharnierflansche (35,36) aufweist.

14. Verfahren zur Montage von mindestens vier Seitentüren (6,7,8,9) an einer Fahrzeugkarosserie (5) mit Türausschnitten (30,31) in einer Montageanlage (1), wobei mehrere Seitentüren (6,7,8,9) in einer Montagestation (2,3) gemeinsam an jeweils einer Fahrzeugseite montiert werden, wobei die Seitentüren (6,7,8,9) von einer Positioniereinrichtung (13) mit einer Mess- und Ausrichtvorrichtung (17) gemeinsam gehalten, vermessen und ausgerichtet und mit einer Fixiereinrichtung (19) fixiert werden.

15. Montageverfahren nach Anspruch 14, **dadurch gekennzeichnet, dass** die vorderen und hinteren Seitentüren (6,7,8,9) paarweise erst an der einen Karosserieseite und zeitlich versetzt danach an der andereren Karosserieseite montiert werden.

16. Montageverfahren nach Anspruch 14 oder 15, **dadurch gekennzeichnet, dass** die Seitentüren (6,7,8,9) von der Karosserieinnenseite her fixiert werden, wobei die neben der Positioniereinrichtung (13) auf der gleichen Seite der Fahrzeugkarosserie (5) oder auf der gegenüberliegenden Karosserieseite angeordnete Fixiereinrichtung (19) in den Karosserieinnenraum (26) bewegt wird.

## Claims

1. Assembly system (1) for the assembly of at least four side doors (6, 7, 8, 9) on a vehicle body (5) having door cutouts (30, 31), wherein at least one assembly station (2, 3) is provided for the joint assembly in each case of a plurality of side doors (6, 7, 8, 9) in each case on one side of a vehicle, wherein an assembly device (12) is arranged in the assembly stations (2, 3), the assembly device having a positioning device (13) with a measuring and aligning mechanism (17) for the side doors (6, 7, 8, 9), and a fixing device (19) for fixing the doors.

2. Assembly system according to Claim 1,
**characterized in that** the positioning device (13) is arranged on one side of the vehicle body (5) and the fixing device (19) is arranged next to said positioning device or on the opposite side of the body, and the fixing device (19) being movable into the body interior (26) and being designed for an inner side fixing of the door from the other side of the vehicle.

3. Assembly system according to Claim 1 or 2,
**characterized in that** the assembly system (1) has a plurality of consecutive assembly stations (2, 3) with a side-interchanged arrangement of the positioning and fixing devices (13, 19).

4. Assembly system according to Claim 1, 2 or 3, **characterized in that** the assembly device (12) is designed for assembly of the side doors (6, 7, 8, 9) in the door cutouts (30, 31) in the closed position.

5. Assembly system according to one of Claims 1 to 4, **characterized in that** the positioning device (13) has at least two positioning robots (14) which are connected to the measuring and aligning mechanism (17) and have gripping tools (15) for one side door (6, 7, 8, 9) in each case.

6. Assembly system according to one of Claims 1 to 4, **characterized in that** the positioning device (13) has a positioning robot (14) with a combined gripping tool having additional axles for independently holding and moving a plurality of side doors (6, 7, 8, 9), the additional axles being connected to the measuring and aligning mechanism (17).

7. Assembly system according to one of the preceding claims, **characterized in that** the measuring and aligning mechanism (17) has a plurality of sensors (18) which are arranged on the gripping tool or gripping tools (15) and are intended for measuring the actual position and the actual size of the side doors (6, 7, 8, 9) and of the vehicle body (5), in particular the door cutouts (30, 31), and a controller for precisely aligning the side doors (6, 7, 8, 9) to one another and relative to the door cutouts (30, 31).

8. Assembly system according to one of the preceding claims, **characterized in that** the positioning device (13) has at least one torque support (16) which is controllable by the measuring and aligning mechanism (17) and is intended for the gripping tool or the gripping tools (15).

9. Assembly system according to one of the preceding claims, **characterized in that** the fixing device (19) has one or more fixing robots (20) with fixing tools (21).

10. Assembly system according to one of the preceding claims, **characterized in that** the assembly system (1) has one or more preassembly devices (25) for the assembly of hinges on the side doors (6, 7, 8, 9).

11. Assembly system according to one of the preceding claims, **characterized in that,** during the preassembly operation, the door hinge (32) is positionable in the y direction on the side door (6, 7, 8, 9), the door hinge (32) being positionable in the x and z directions on the door cutout of the side door (6, 7, 8, 9) during the subsequent door assembly.

12. Assembly system according to one of the preceding claims, **characterized in that,** during the door assembly, the door hinge (32) is fastenable to the outer side (33) of a door pillar (27, 28, 29), the inner side (32) of the door pillar (27, 28, 29) having at least one passage opening (39) for a fixing means (38).

13. Assembly system according to one of the preceding claims, **characterized in that** the side door (6, 7, 8, 9) has a door rebate (40) for receiving the door hinge (34) and the hinge flanges (35, 36) thereof, which are aligned substantially at right angles to each other in the closed position.

14. Method for the assembly of at least four side doors (6, 7, 8, 9) on a vehicle body (5) having door cutouts (30, 31) in an assembly system (1), wherein a plurality of side doors (6, 7, 8, 9) are fitted jointly on in each case one side of a vehicle in an assembly station (2, 3), and wherein the side doors (6, 7, 8, 9) are jointly held, measured and aligned by a positioning device (13) having a measuring and aligning mechanism (17), and are fixed by a fixing device (19).

15. Assembly method according to Claim 14,
**characterized in that** the front and rear side doors (6, 7, 8, 9) are first of all fitted in pairs on one side of the body and then, with a time delay, on the other side of the body.

16. Assembly method according to Claim 14 or 15, **characterized in that** the side doors (6, 7, 8, 9) are fixed from the inner side of the body, the fixing device (19) which is arranged next to the positioning device (13) on the same side of the vehicle body (5) or on the opposite side of the body being moved into the body interior (26).

## Revendications

1. Installation de montage (1) pour le montage d'au moins quatre portes latérales (6, 7, 8, 9) à une carrosserie de véhicule (5) avec des échancrures de porte (30, 31), au moins une station de montage (2, 3) étant prévue pour l'ensemble du montage de respectivement plusieurs portes latérales (6, 7, 8, 9) sur respectivement un côté du véhicule, un dispositif de montage (12) étant disposé dans les stations de montage (2, 3), ledit dispositif comportant un dispositif de positionnement (13) pourvu d'un dispositif de mesure et d'alignement (17) pour les portes latérales (6, 7, 8, 9) et d'un dispositif de fixation (19) pour la fixation des portes.

2. Installation de montage selon la revendication 1, **caractérisée en ce que** le dispositif de positionnement (13) est disposé sur un côté de la carrosserie de véhicule (5) et **en ce que** le dispositif de fixation (19) est disposé à côté ou sur le côté opposé de la carrosserie, le dispositif de fixation (19) pouvant être déplacé dans l'espace intérieur de carrosserie (26) et aménagé pour une fixation des portes côté intérieur depuis l'autre côté du véhicule.

3. Installation de montage selon la revendication 1 ou 2, **caractérisée en ce que** l'installation de montage (1) comporte plusieurs stations de montage (2, 3) successives avec un agencement des dispositifs de positionnement et de fixation (13, 19) pouvant permuter de côté.

4. Installation de montage selon la revendication 1, 2 ou 3, **caractérisée en ce que** le dispositif de montage (12) est aménagé pour un montage des portes latérales (6, 7, 8, 9) en position fermée dans les échancrures de porte (30, 31).

5. Installation de montage selon l'une quelconque des revendications 1 à 4, **caractérisée en ce que** le dispositif de positionnement (13) comporte au moins deux robots de positionnement (14) reliés au dispositif de mesure et d'alignement (17) et pourvus d'outils de préhension (15) pour chaque porte latérale (6, 7, 8, 9) respective.

6. Installation de montage selon l'une quelconque des revendications 1 à 4, **caractérisée en ce que** le dispositif de positionnement (13) est un robot de positionnement (14) avec un outil de préhension combiné avec axes complémentaires pour un soutien et un déplacement autonomes de plusieurs portes latérales (6, 7, 8, 9), les axes complémentaires étant reliés au dispositif de mesure et d'alignement (17).

7. Installation de montage selon l'une quelconque des revendications précédentes, **caractérisée en ce que** le dispositif de mesure et d'alignement (17) comporte plusieurs capteurs (18) disposés au niveau du ou des outils de préhension (15) pour mesurer la position réelle et les dimensions réelles des portes latérales (6, 7, 8, 9) et de la carrosserie de véhicule (5), notamment celles des échancrures de porte (30, 31), et une commande d'alignement ajusté des portes latérales (6, 7, 8, 9) entre elles et par rapport aux échancrures de porte (30, 31).

8. Installation de montage selon l'une quelconque des revendications précédentes, **caractérisée en ce que** le dispositif de positionnement (13) comporte au moins un support de couple (16) pouvant être commandé par le dispositif de mesure et d'alignement (17) pour le ou les outils de préhension (15).

9. Installation de montage selon l'une quelconque des revendications précédentes, **caractérisée en ce que** le dispositif de fixation (19) comporte un ou plusieurs robots de fixation (20) pourvus d'outils de fixation (21).

10. Installation de montage selon l'une quelconque des revendications précédentes, **caractérisée en ce que** l'installation de montage (1) comporte un ou plusieurs dispositifs de prémontage (25) pour le montage des charnières au niveau des portes latérales (6, 7, 8, 9).

11. Installation de montage selon l'une quelconque des revendications précédentes, **caractérisée en ce que** la charnière de porte (32) peut être positionnée lors du prémontage dans la direction y au niveau de la porte latérale (6, 7, 8, 9), la charnière de porte (32) pouvant être positionnée lors du prémontage suivant dans la direction x et dans la direction z au niveau de l'échancrure de porte de la porte latérale (6, 7, 8, 9).

12. Installation de montage selon l'une quelconque des revendications précédentes, **caractérisée en ce que** la charnière de porte (32) peut être fixée lors du prémontage au côté extérieur (33) d'un montant de porte (27, 28, 29), le montant de porte (27, 28, 29) comportant au niveau du côté intérieur (32) au moins une ouverture traversante (39) pour un moyen de fixation (38).

13. Installation de montage selon l'une quelconque des revendications précédentes, **caractérisée en ce que** la porte latérale (6, 7, 8, 9) comporte un pli de porte (40) pour le logement de la charnière de porte (34) et ses brides de charnières (35, 36) pour l'essentiel perpendiculaires entre elles en position fermée.

14. Procédé de montage d'au moins quatre portes latérales (6, 7, 8, 9) à une carrosserie de véhicule (5) pourvue d'échancrures de porte (30, 31) dans une installation de montage (1), plusieurs portes latérales (6, 7, 8, 9) étant montées ensemble dans une station de montage (2, 3) sur respectivement un côté du véhicule, les portes latérales (6, 7, 8, 9) étant maintenues ensemble, mesurées et alignées à l'aide d'un dispositif de mesure et d'alignement (17), depuis un dispositif de positionnement (13), et fixées à l'aide d'un dispositif de fixation (19).

15. Procédé de montage selon la revendication 14, **caractérisé en ce que** les portes latérales (6, 7, 8, 9) avant et arrière sont montées par paire d'abord sur un premier côté de la carrosserie puis dans un second temps sur l'autre côté de la carrosserie.

16. Procédé de montage selon la revendication 14 ou 15, **caractérisé en ce que** les portes latérales (6, 7, 8, 9) sont fixées depuis le côté intérieur de la carrosserie, le dispositif de fixation (19) disposé à côté du dispositif de positionnement (13) sur le même côté de la carrosserie de véhicule (5) ou sur le côté opposé de la carrosserie étant déplacé dans l'espace intérieur (26) de la carrosserie.
